# EUROPEAN PATENT APPLICATION

(11) **EP 4 821 796 A1**
(43) Date of publication of application: **14.10.2026**
(21) Application number: 26166555.8
(22) Date of filing: 20.03.2026
(51) Int. Cl.: B62D 21/11, B62D 21/15, B62D 21/20, B62D 29/00

(54) **VEHICLE FRAME STRUCTURE**

(30) Priority: 02.04.2025 JP 2025061378
(71) Applicant: Toyota Jidosha Kabushiki Kaisha, Toyota-shi, Aichi-ken 471-8571 (JP)
(72) Inventor: ABE, Satoru, TOYOTA-SHI, AICHI-KEN 471-8571 (JP); SHIOTA, Yuzuru, TOYOTA-SHI, AICHI-KEN 471-8571 (JP); NURUKI, Tetsuo, TOYOTA-SHI, AICHI-KEN 471-8571 (JP); ARAKAWA, Seiji, TOYOTA-SHI, AICHI-KEN 471-8571 (JP); ENDO, Kazusa, TOYOTA-SHI, AICHI-KEN 471-8571 (JP)
(74) Representative: Cabinet Beau de Loménie

(57) **Abstract**

A dashboard cross member lower (30) extending along a vehicle width direction is arranged at a front section and lower side of a vehicle cabin of a vehicle, with a shock absorption member (54) provided inside the dashboard cross member lower. Crash energy from collision load is accordingly absorbed by plastic deformation of the shock absorption member together with the dashboard cross member lower when collision load has been input from the vehicle front.

## Description

### Technical Field

The present disclosure relates to a vehicle frame structure.

### Related Art

Technology related to a vehicle installed with a battery pack at a lower side of a floor panel is disclosed in Japanese Patent Application Laid-Open (JP-A) No. 2019-18732 (Patent Document 1). In such a vehicle, a dashboard cross member extends along a vehicle width direction in a vehicle front section. The vehicle front-rear direction front end portions of the battery pack are coupled to the dashboard cross member. This means that when collision load input from the vehicle front side has been transmitted to a front end portion of the battery pack, the collision load is transmitted to the dashboard cross member through a coupling section where the front end portion of the battery pack has been coupled to the dashboard cross member.

However, in the technology disclosed in Patent Document 1, when collision load has been input from the vehicle front side, this collision load is transmitted to the dashboard cross member through the vehicle body configuration member (vehicle configuration member), such as a front side member or the like, and is then transmitted to the battery pack through the coupling section. Namely, from out of the collision load from the vehicle front side, collision load that was transmitted to the dashboard cross member is transmitted to the battery pack, and so a concern arises regarding collision load acting on the battery pack.

### SUMMARY

In consideration of the above circumstances, an object of the present disclosure is to obtain a vehicle frame structure that effectively absorbs crash energy from collision load input to a vehicle front section.

A vehicle frame structure of a first aspect includes a lower vehicle frame member that is either arranged extending along a vehicle width direction at a vehicle front-rear direction front section of a vehicle cabin and at a lower side of the vehicle cabin, or arranged extending along the vehicle width direction at the vehicle front-rear direction front section of the vehicle cabin and at a lower section of the vehicle cabin, and a first shock absorption section that is provided to the lower vehicle frame member.

In the first aspect, the lower vehicle frame member is either arranged extending along the vehicle width direction at the vehicle front-rear direction front section of the vehicle cabin and at the lower side of the vehicle cabin, or arranged extending along the vehicle width direction at the vehicle front-rear direction front section of the vehicle cabin and at the lower section of the vehicle cabin. The first shock absorption section is provided to the lower vehicle frame member. This means that in the present aspect, when collision load is input from the vehicle front, crash energy from the collision load is absorbed by plastic deformation of the lower vehicle frame member together with the first shock absorption section provided to the lower vehicle frame member.

A vehicle frame structure of a second aspect is the first aspect, wherein the first shock absorption section is provided as plural individual first shock absorption sections along the vehicle front-rear direction.

In the second aspect, due to the first shock absorption section being provided as the plural individual first shock absorption sections along the vehicle front-rear direction, the amount of absorption of crash energy from collision load input from the vehicle front can be raised compared to cases in which only a single first shock absorption member is provided.

A vehicle frame structure of a third aspect is the second aspect, wherein at least part of the plural first shock absorption sections is formed as a single body with the lower vehicle frame member.

In the third aspect, at least part of the first shock absorption sections is formed as a single body with the lower vehicle frame member, and so ribs or the like are not needed to ensure that the position of the first shock absorption section is not displaced when collision load is input. This means that residual non-collapsed portions due to ribs or the like do not arise. The present aspect is accordingly able to more effectively absorb crash energy due to suppressing residual non-collapsed portions in the first shock absorption section. Note that all of the first shock absorption section may be formed as a single body with the lower vehicle frame member.

A vehicle frame structure of a fourth aspect is the first aspect, wherein the lower vehicle frame member is arranged at the vehicle front-rear direction front section and lower side of the vehicle cabin and a battery arranged at a vehicle lower side of the vehicle cabin is also included, and at least part of the first shock absorption section is provided so as to overlap with the battery in at least one direction from out of a vehicle height direction and the vehicle front-rear direction.

In the fourth aspect, the vehicle frame member is arranged at the vehicle front-rear direction front section and lower side of the vehicle cabin and the battery is arranged at the vehicle lower side of the vehicle cabin. At least part of the first shock absorption section overlaps with the battery in the at least one direction from out of the vehicle height direction and the vehicle front-rear direction. This means that in the present aspect, due to crash energy from collision load input from the vehicle front being absorbed by plastic deformation of the lower vehicle frame member and the first shock absorption section prior to being transmitted to the battery, load input to the battery can be suppressed. Note that the first shock absorption section may be provided so as to overlap with the battery in the vehicle height direction and the vehicle front-rear direction.

A vehicle frame structure of a fifth aspect is the fourth aspect, further including a suspension member provided at a vehicle front side of the battery, wherein the suspension member is directly or indirectly connected to the lower vehicle frame member.

In the fifth aspect, the suspension member is directly or indirectly connected to the lower vehicle frame member. This means that when collision load from the vehicle front has been input from the vehicle lower side, this collision load is transmitted to the lower vehicle frame member through the suspension member. The collision load transmitted to the lower vehicle frame member is effectively absorbed by the first shock absorption section provided to the lower vehicle frame member. The present aspect is accordingly able to suppress collision load from being input to the battery provided at the vehicle rear side of the suspension member.

Note that the suspension member is directly connected to the lower vehicle frame member, or is indirectly connected thereto through an interjacent member.

A vehicle frame structure of a sixth aspect is the fifth aspect, wherein the lower vehicle frame member includes a first lower wall that configures a bottom section of the lower vehicle frame member and extends along the vehicle front-rear direction when viewed in vehicle longitudinal cross-section, a second lower wall that configures the lower vehicle frame member bottom section, that is formed at a vehicle rear side of the first lower wall and further to the vehicle lower side than the first lower wall, and that extends along the vehicle front-rear direction when viewed in vehicle longitudinal cross-section, and a vertical wall that connects the first lower wall and the second lower wall together in the vehicle height direction. A vehicle front-rear direction rear side of the suspension member is connected to the first lower wall, and a vehicle front-rear direction front side of the battery is connected to the second lower wall.

In the sixth aspect, the lower vehicle frame member includes the first lower wall, the second lower wall, and the vertical wall, with the lower vehicle frame member bottom section configured by the first lower wall and the second lower wall. The second lower wall is formed at the vehicle rear side of the first lower wall and further to the vehicle lower side than the first lower wall, with the first lower wall and the second lower wall connected together by the vertical wall in the vehicle height direction.

The rear end side of the suspension member is connected to the first lower wall, and the front end side of the battery is connected to the second lower wall. Namely, in the lower vehicle frame member, connection points to the suspension member side and connection points to the battery side are offset from each other in the vehicle height direction. This means that in the present aspect, collision load input from the vehicle front is not directly transmitted from the suspension member to the battery.

Reference to the vehicle front-rear direction rear side of the suspension member also encompasses cases in which a vehicle front-rear direction rear portion of the suspension member is not directly connected to the first lower wall, namely, there cases in which there is an interjacent member interposed between the suspension member and the first lower wall. Moreover, reference to the vehicle front-rear direction front side of the battery also encompasses cases in which a vehicle front-rear direction front portion of the battery is not directly connected to the second lower wall, namely, cases in which there is an interjacent member interposed between the battery and the second lower wall.

A vehicle frame structure of a seventh aspect is the sixth aspect, wherein a rear end portion of the suspension member is arranged so as to be separated from the vertical wall in the vehicle front-rear direction and so as to overlap with the first lower wall in the vehicle height direction when viewed in vehicle longitudinal cross-section.

In the seventh aspect, the rear end portion of the suspension member is arranged so as to overlap with the vertical wall in the vehicle height direction. This means that when the suspension member has retracted toward the vehicle rear side under collision load input from the vehicle front, the rear end portion of the suspension member hits the vertical wall. As a result thereof, in the present aspect collision load is transmitted to the lower vehicle frame member, enabling crash energy to be absorbed by the first shock absorption section provided to the lower vehicle frame member.

However, in cases in which there is an interjacent member interposed between the rear end portion of the suspension member and the lower vehicle frame member, it is the interjacent member that hits the vertical wall.

A vehicle frame structure of an eighth aspect is the first aspect, further including an upper vehicle frame member extending along the vehicle width direction at a vehicle upper side of the lower vehicle frame member, wherein a second shock absorption section is provided to the upper vehicle frame member.

In the eighth aspect, the second shock absorption section is provided to the upper vehicle frame member. This means that in the present aspect, when collision load has been input from the vehicle front, crash energy from the collision load is more effectively absorbed by plastic deformation of the upper vehicle frame member and the second shock absorption section provided to the upper vehicle frame member, in addition to the first shock absorption section.

A vehicle frame structure of a ninth aspect is the eighth aspect, wherein plural of the second shock absorption sections are provided along the vehicle front-rear direction.

In the ninth aspect, plural of the second shock absorption sections are provided along the vehicle front-rear direction, enabling the amount of absorption of crash energy from collision load input from the vehicle front to be raised compared to cases in which there is only a single second shock absorption section provided.

A vehicle frame structure of a tenth aspect is the ninth aspect, further including a front side member extending along the vehicle front-rear direction at a vehicle width direction outside, wherein the front side member is connected to the upper vehicle frame member, and at least part of the second shock absorption sections is arranged so as to overlap with the front side member in a vehicle height direction.

In the tenth aspect, the front side member is connected to the upper vehicle frame member, and at least part of the second shock absorption sections is arranged so as to overlap with the front side member in the vehicle height direction. This means that in the present aspect, the crash energy from collision load input to the front side member is effectively absorbed by plastic deformation of the upper vehicle frame member and the second shock absorption section. Note that the front side member and the second shock absorption section may be arranged so as to overlap entirely in the vehicle height direction.

A vehicle frame structure of an eleventh aspect is the tenth aspect, wherein at least part of the second shock absorption sections is integrally molded to the upper vehicle frame member.

In the eleventh aspect, at least part of the second shock absorption sections is formed as a single body with the upper vehicle frame member, and so ribs or the like are not needed to ensure that the position of the second shock absorption section is not displaced when collision load is input. This means that residual non-collapsed portions due to ribs or the like do not arise. This means that in the present aspect, crash energy can be absorbed even more effectively due to suppressing residual non-collapsed portions in the second shock absorption section. Note that all the second shock absorption sections may be formed as a single body with the lower vehicle frame member.

The vehicle frame structure of a twelfth aspect is any one aspect of the eighth aspect to the eleventh aspect, further including a connection member to connect the lower vehicle frame member and the upper vehicle frame member together, wherein the lower vehicle frame member, the upper vehicle frame member, and the connection member, are formed as a single body.

In the twelfth aspect, the lower vehicle frame member and the upper vehicle frame member and the connection member are formed as a single body. This means that in the present aspect the number of components configuring the vehicle body can be reduced while raising the rigidity of the vehicle body.

The vehicle frame structure according to the present disclosure enables crash energy from collision load input to a vehicle front section to be absorbed effectively.

### BRIEF DESCRIPTION OF DRAWINGS

Exemplary embodiments of the present disclosure will be described in detail based on the following figures, wherein:
Fig. 1 is a perspective view illustrating a configuration of a vehicle body front section applied with a vehicle frame structure according to a first exemplary embodiment;
Fig. 2 is a bottom view illustrating a configuration of a vehicle body front section applied with a vehicle frame structure according to a first exemplary embodiment;
Fig. 3 is a schematic cross-section sectioned along line 3-3 of Fig. 2;
Fig. 4 is a schematic cross-section corresponding to Fig. 3 illustrating a vehicle frame structure according to a second exemplary embodiment;
Fig. 5 is a schematic cross-section corresponding to Fig. 3 illustrating a Modified Example 1 of a vehicle frame structure according to the second exemplary embodiment; and
Fig. 6 is a schematic cross-section corresponding to Fig. 3 illustrating a Modified Example 2 of a vehicle frame structure according to the second exemplary embodiment.

### DESCRIPTION OF EMBODIMENTS

Description follows regarding a vehicle front section structure according to exemplary embodiments of the present invention, with reference to the drawings. Note that in each of the drawings arrow FR, arrow UP, arrow RH respectively indicate a forward direction, an upward direction, and a rightward direction of a vehicle applied with a vehicle frame structure according to an exemplary embodiment of the present invention. Unless explicitly stated otherwise, references in the following description simply to front and rear, up and down, and left and right directions respectively indicate front and rear in the vehicle front-rear direction, up and down in the vehicle height direction, and left and right when facing forward.

### First Exemplary Embodiment

### Vehicle Frame Structure Configuration

Firstly, description follows regarding a configuration of a vehicle frame structure 10 according to the first exemplary embodiment.

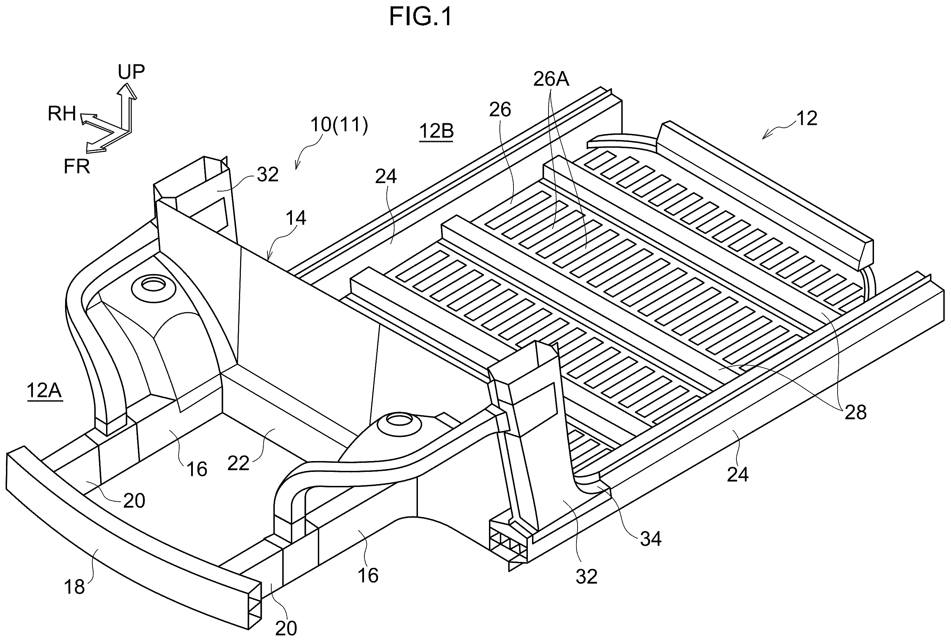

As illustrated in Fig. 1, a vehicle 12 applied with the vehicle frame structure 10 according to the present exemplary embodiment includes a power unit chamber 12A and a vehicle cabin 12B. The power unit chamber 12A and the vehicle cabin 12B are partitioned by a dashboard panel 14, with the power unit chamber 12A arranged at the front side of the vehicle cabin 12B.

The power unit chamber 12A is able to house various members, such as electrical components, a gear box, and auxiliary equipment. A left-right pair of front side members 16 extending along the vehicle front-rear direction are arranged in the power unit chamber 12A at respective vehicle width direction sides of the vehicle 12.

The front side members 16 configure a vehicle frame member, and a bumper reinforcement 18, having a circular arc shape curved such that a vehicle width direction central portion thereof projects forward in vehicle plan view, is connected to front end portions of the front side members 16 by welding, fastenings, or the like. Note that crash boxes 20 may also be provided between the respective front side members 16 and the bumper reinforcement 18 to absorb crash energy from collision load input from the vehicle front side.

Moreover, rear end portions of the left-right pair of front side members 16 are coupled to a dashboard cross member upper (upper vehicle frame member) 22 provided at a front end portion of a left-right pair of rockers 24 and a lower section of the dashboard panel 14. Note that although not illustrated in the drawings, a front side member rear may be provided as a separate member to the rear end portions of the front side members 16.

The left-right pair of rockers 24 extend in the vehicle front-rear direction at each vehicle width direction side, and are configured with a closed cross-section profile orthogonal to their length direction when viewed in cross-section sectioned along the width direction (vehicle height direction and vehicle width direction) so as to configure part of a frame at the two sides of the vehicle 12.

Each of the left-right direction end portions of a floor panel 26 configuring the floor surface inside the vehicle cabin are respectively coupled to the left-right pair of rockers 24. The floor panel 26 of the present exemplary embodiment is not one formed with a tunnel section for installing a drive shaft, exhaust pipe, and the like. This means that a section of the floor panel 26 between the left-right pair of rockers 24 is substantially flat. Note that plural beads 26A are formed to the section of the floor panel 26 between the left-right pair of rockers 24 in order to secure rigidity thereof.

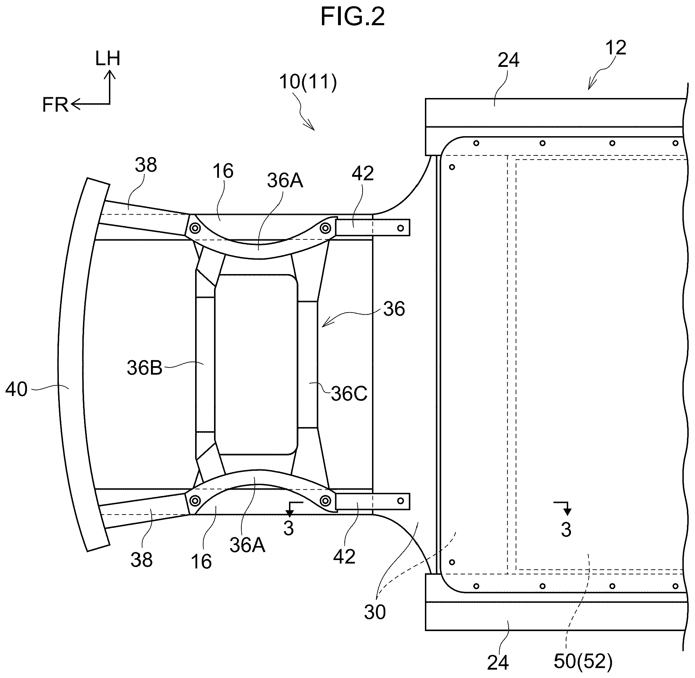

Plural cross members 28 span between the left-right pair of rockers 24. The left-right direction end portions of the plural cross members 28 are joined to the left-right pair of rockers 24. Moreover, as illustrated in Fig. 2, a dashboard cross member lower (lower vehicle frame member) 30 spans between front end portions of the left-right pair of rockers 24, with each of the left-right direction end portions of the dashboard cross member lower 30 joined to the front end portions of the respective left-right pair of rockers 24. Note that Fig. 2 is a bottom view illustrating a configuration of a vehicle front section 11.

As illustrated in Fig. 1, front pillars 32 are provided projecting upward from respective front portions of the left-right pair of rockers 24, with a front section of a roof panel (omitted in the drawings) supported by the left and right front pillars 32. Part of a door opening section 34, which is closed off or opened by a front door, is configured by the left and right front pillars 32.

Next, as illustrated in Fig. 2, a suspension member 36 for supporting a front suspension is provided at a lower side of the front side members 16. The suspension member 36 includes a left-right pair of suspension member side rails 36A that are supported so as to depend from the front side members 16, extending along the vehicle front-rear direction at respective vehicle width direction side portions of the suspension member 36.

A front cross member 36B spans along the vehicle width direction between front end portions of the pair of suspension member side rails 36A, and a rear cross member 36C spans along the vehicle width direction between rear end portions of the suspension member side rails 36A.

Respective lower side members 38 are coupled to the front end portions of the pair of suspension member side rails 36A. The lower side members 38 are configured with a closed cross-section structure formed in a rectangular tube shape, and extend along the vehicle front-rear direction toward the vehicle front side from the front end portions of the suspension member side rails 36A.

A lower cross member 40 is attached to front end portions of the lower side members 38. The lower cross member 40 has a circular arc shape curved such that a vehicle width direction central portion thereof projects forward in vehicle plan view and is arranged at the lower side of the bumper reinforcement 18 illustrated in Fig. 1 so as to overlap in the vehicle height direction with the bumper reinforcement 18.

The rear end portions of the pair of suspension member side rails 36A are connected to coupling members (interjacent members) 42, and the rear end portions of the coupling members 42 are connected to the dashboard cross member lower 30.

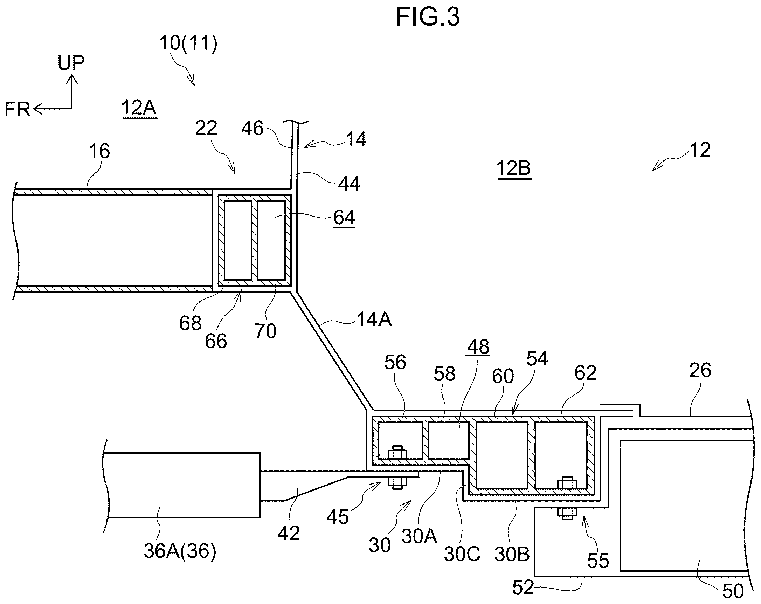

Fig. 3 is a schematic cross-section illustrating a cross-section sectioned along line 3-3 of Fig. 2. As illustrated in Fig. 3, in the present exemplary embodiment, the dashboard panel 14 is configured including a first panel 44 and a second panel 46, with the dashboard cross member lower 30 formed from the first panel 44 and the second panel 46 with a closed-cross-section section 48. The first panel 44 is configured with a flat face on the vehicle cabin 12B side, and extends in both the vehicle width direction and the vehicle front-rear direction. A recess indented toward the vehicle lower side is accordingly formed on the second panel 46 side so as to configure, together with the first panel 44, the closed-cross-section section 48.

The dashboard cross member lower 30 is configured including a first lower wall 30A and a second lower wall 30B, which together configure a lower wall of the dashboard cross member lower 30. The second lower wall 30B is formed further to the vehicle rear side and the vehicle lower side than the first lower wall 30A, with a vertical wall 30C provided along the vehicle height direction and the vehicle width direction so as to connect the first lower wall 30A and the second lower wall 30B together.

The coupling members 42 connected to the rear end portions of the suspension member side rails 36A of the suspension member 36 are connected to the first lower wall 30A of the dashboard cross member lower 30 by fastening portions (connection points) 45, and a battery case (interjacent member) 52 housing a battery 50 is connected to the second lower wall 30B of the dashboard cross member lower 30 at fastening portions (connection points) 55.

As described above, the first lower wall 30A of the dashboard cross member lower 30 is arranged at the vehicle upper side of the second lower wall 30B, with the vertical wall 30C provided between the first lower wall 30A and the second lower wall 30B. This means that the coupling members 42 connected to the rear end portions of the suspension member side rails 36A of the suspension member 36 are arranged so as to be separated from the vertical wall 30C in the vehicle front-rear direction, and also so as to overlap with the first lower wall 30A in the vehicle height direction when viewed in vehicle longitudinal cross-section.

Note that the coupling members 42 are not always necessary as long as the rear end portions of the suspension member side rails 36A of the suspension member 36 can be connected to the first lower wall 30A of the dashboard cross member lower 30.

Moreover, in the present exemplary embodiment, the dashboard cross member lower 30 houses a shock absorption member (first shock absorption section) 54 inside the closed-cross-section section 48, with the shock absorption member 54 formed so as to follow the profile of the dashboard cross member lower 30. Note that the shock absorption member 54 is able to perform plastic deformation under input of collision load, enabling crash energy from collision load to be absorbed by plastic deformation of the shock absorption member 54.

Moreover, the shock absorption member 54 is, for example, configured by plural rectangular tubes (first shock absorption sections) 56, 58, 60, 62 formed with rectangular tube shapes extending along the vehicle width direction, with these arranged along the vehicle front-rear direction in this sequence from the front.

These rectangular tubes are formed as a single body, and are respectively formed in a state such that partition walls partitioning between adjacent rectangular tubes are common. Note that these rectangular tubes are not necessarily all formed as a single body, and the rigidity is able to be changed locally by forming one or more as a separate body, and employing different materials at different positions.

The rectangular tubes 60, 62 are formed with a longer length along the vehicle height direction than the rectangular tubes 56, 58 so as to match the shape of the dashboard cross member lower 30. Moreover, the rectangular tube 56 and the rectangular tube 58 are formed at substantially the same size as each other, and the rectangular tube 60 and the rectangular tube 62 are formed at substantially the same size as each other. Obviously, the rectangular tube 56 and the rectangular tube 58, and the rectangular tube 60 and the rectangular tube 62, may have different sizes from each other, including in the vehicle height direction and the vehicle front-rear direction.

Moreover, at least part of the shock absorption member 54 is provided so as to overlap with the battery 50 in both the vehicle height direction and the vehicle front-rear direction. For example, in the present exemplary embodiment, the rectangular tubes 56, 58, 60, 62 of the shock absorption member 54 overlap with the battery 50 in the vehicle front-rear direction, and the rectangular tube 62 of the shock absorption member 54 overlaps with the battery 50 in the vehicle height direction.

Furthermore, in the present exemplary embodiment, similarly to the dashboard cross member lower 30, a dashboard cross member upper 22 is also formed from the first panel 44 and the second panel 46 with a closed-cross-section section 64. In the present exemplary embodiment, as described above, the first panel 44 is configured with a flat face on the vehicle cabin 12B side, extending in both the vehicle width direction and the vehicle height direction.

A recess indented toward the vehicle front side is accordingly formed on the second panel 46 side so as to configure, together with the first panel 44, the closed-cross-section section 64. Note that the dashboard panel 14 is configured with a connection section 14A connecting the dashboard cross member upper 22 and the dashboard cross member lower 30 together.

The dashboard cross member upper 22 houses a shock absorption member (second shock absorption section) 66 inside the closed-cross-section section 64, with the shock absorption member 66 being formed so as to follow the profile of the dashboard cross member upper 22. Similarly to the shock absorption member 54, the shock absorption member 66 is also able to perform plastic deformation under input of collision load, enabling crash energy from collision load to be absorbed by the shock absorption member 66 undergoing plastic deformation.

Moreover, the shock absorption member 66 is, for example, configured by plural rectangular tubes (second shock absorption sections) 68, 70 formed with rectangular tube shapes extending along the vehicle width direction and formed as a single body along the vehicle front-rear direction, with the rectangular tube 68 and the rectangular tube 70 formed with substantially the same shape as each other.

These rectangular tubes are formed as a single body, formed in a state such that a partition wall partitioning between adjacent rectangular tubes is common. Note that these rectangular tubes are not necessarily all formed as a single body, and the rigidity is able to be changed locally by forming one or more as a separate body, and employing different materials at different positions.

Moreover, the front side members 16 are connected to the dashboard cross member upper 22, and the shock absorption member 66 provided inside the dashboard cross member upper 22 is arranged so as to overlap with the front side members 16 in the vehicle height direction. Note that the shock absorption member 66 does not necessarily always overlap in the vehicle height direction with the front side members 16, and may be formed larger than the front side members 16 in the vehicle height direction.

Moreover, although in the present exemplary embodiment the dashboard cross member upper 22 and the dashboard cross member lower 30 are respectively formed from the first panel 44 and the second panel 46 with the closed-cross-section sections 48, 64, there is no limitation thereto. For example, the dashboard cross member upper 22 and the dashboard cross member lower 30 may employ respective independent panels. In such cases, an independent panel may also be employed as a separate member for the connection section 14A connecting the dashboard cross member upper 22 and the dashboard cross member lower 30.

Operation and Advantageous Effects of Vehicle Front Section Structure

Next, description follows regarding the operation and advantageous effects of the vehicle front section structure according to the present exemplary embodiment.

In the present exemplary embodiment, as illustrated in Fig. 3, the dashboard cross member lower 30 extends along the vehicle width direction at a front section and lower side of the vehicle cabin 12B of the vehicle 12, with the shock absorption member 54 provided inside the dashboard cross member lower 30.

This means that in the present exemplary embodiment, when collision load is input from the vehicle front, crash energy from the collision load is absorbed by plastic deformation of the dashboard cross member lower 30 and the shock absorption member 54 provided inside the dashboard cross member lower 30. Namely, in the present exemplary embodiment, crash energy from collision load input to the vehicle front section 11 can be effectively absorbed.

Moreover, in the present exemplary embodiment, at least part of the shock absorption member 54 is provided so as to overlap with the battery 50 in the vehicle height direction and the vehicle front-rear direction. This means that crash energy from collision load input from the vehicle front is absorbed by plastic deformation of the dashboard cross member lower 30, including the shock absorption member 54, prior to being transmitted to the battery 50, enabling load input to the battery 50 to be suppressed.

Furthermore, in the present exemplary embodiment, the shock absorption member 54 is formed by the plural rectangular tubes 56, 58, 60, 62 contiguous along the vehicle front-rear direction in this sequence from the front. This means that when collision load is input from the vehicle front, crash energy is absorbed by sequential plastic deformation of the rectangular tubes 56, 58, 60, 62 along the vehicle front-rear direction.

In the present exemplary embodiment, due to the shock absorption member 54 being formed by plural individual rectangular tubes in this manner, the amount of absorption of crash energy from collision load input from the vehicle front can be raised compared to cases in which a shock absorption member is configured from a single rectangular tube.

Moreover, in the present exemplary embodiment, the suspension member side rails 36A of the suspension member 36 are connected to the dashboard cross member lower 30 through the coupling members 42. This means that in the present exemplary embodiment, when collision load from the vehicle front has been input from the vehicle lower side, this collision load is transmitted to the dashboard cross member lower 30 through the suspension member 36.

Thus in the present exemplary embodiment, the collision load transmitted to the dashboard cross member lower 30 is absorbed effectively by the shock absorption member 54 provided inside the dashboard cross member lower 30. This thereby enables collision load to be suppressed from acting on the battery 50 provided at the vehicle rear side of the suspension member 36.

Moreover, in the present exemplary embodiment, the coupling members 42 connected to the suspension member 36 are connected to the first lower wall 30A of the dashboard cross member lower 30, and the battery case 52 housing the battery 50 is connected to the second lower wall 30B of the dashboard cross member lower 30. The first lower wall 30A is arranged at the vehicle upper side of the second lower wall 30B, the coupling members 42 connected to the suspension member 36 are separated from the vertical wall 30C in the vehicle front-rear direction, and are arranged so as to overlap with the first lower wall 30A in the vehicle height direction when viewed in vehicle longitudinal cross-section.

Namely, in the present exemplary embodiment, in the dashboard cross member lower 30, the fastening portions 45 for the coupling members 42 connected to the suspension member 36, and the fastening portions 55 for the battery case 52 housing the battery 50, are offset from each other in the vehicle height direction.

This means that in the present exemplary embodiment, collision load input from the vehicle front is not directly transmitted from the suspension member 36 to the battery 50. This means that the present exemplary embodiment is able to suppress collision load from being input to the battery 50.

Furthermore, in the present exemplary embodiment, the fastening portions 45 between the coupling members 42 where the suspension member 36 are connected and the dashboard cross member lower 30 are arranged further toward the vehicle upper side than the fastening portions 55 where the battery case 52 housing the battery 50 and the dashboard cross member lower 30 are connected. Moreover, the coupling members 42 are arranged so as to overlap with the vertical wall 30C in the vehicle height direction.

This means that in the present exemplary embodiment, in cases in which the suspension member 36 has retracted toward the vehicle rear side under collision load input from the vehicle front, the coupling members 42 hit the vertical wall 30C and collision load is transmitted to the dashboard cross member lower 30, enabling crash energy to be absorbed by the shock absorption member 54 provided inside the dashboard cross member lower 30.

Moreover, in the present exemplary embodiment the shock absorption member 66 is provided inside the dashboard cross member upper 22. This means that when collision load has been input from the vehicle front, crash energy from collision load is absorbed more effectively in the present exemplary embodiment by plastic deformation of the dashboard cross member upper 22 and the shock absorption member 66 provided inside the dashboard cross member upper 22, in addition to plastic deformation of the dashboard cross member lower 30 and the shock absorption member 54.

Moreover, in the shock absorption member 66, the plural rectangular tubes 68, 70 are provided along the vehicle front-rear direction. This means that when collision load is input from the vehicle front, crash energy is absorbed by the rectangular tubes 68, 70 plastically deforming in sequence along the vehicle front-rear direction.

This means that in the present exemplary embodiment, due to the shock absorption member 66 being formed by plural individual rectangular tubes in this manner, the amount of absorption of crash energy from collision load input from the vehicle front can be raised compared to cases in which a shock absorption member is configured from a single rectangular tube.

Moreover, in the present exemplary embodiment, the front side members 16 are connected to the dashboard cross member upper 22, and the shock absorption member 66 provided inside the dashboard cross member upper 22 is arranged so as to overlap with the front side members 16 in the vehicle height direction. This means that in the present exemplary embodiment, the crash energy from collision load input to the front side members 16 is absorbed effectively by plastic deformation of the shock absorption member 66.

### Second Exemplary Embodiment

Next, description follows regarding a configuration of a vehicle frame structure 100 according to a second exemplary embodiment. Note that configuration and operations similar to those of the first exemplary embodiment will be appended with the same reference numerals to those of the first exemplary embodiment, and explanation thereof will be omitted.

In the first exemplary embodiment, as illustrated in Fig. 3, the dashboard panel 14 is configured including the first panel 44 and the second panel 46. The dashboard cross member upper 22 formed with the closed-cross-section section 64 from the first panel 44 and the second panel 46, the dashboard cross member lower 30 formed with the closed-cross-section section 48, and the connection section 14A connecting the dashboard cross member upper 22 and the dashboard cross member lower 30 together, are each provided. Furthermore, the shock absorption member 66 is provided inside the dashboard cross member upper 22, and the shock absorption member 54 is provided inside the dashboard cross member lower 30.

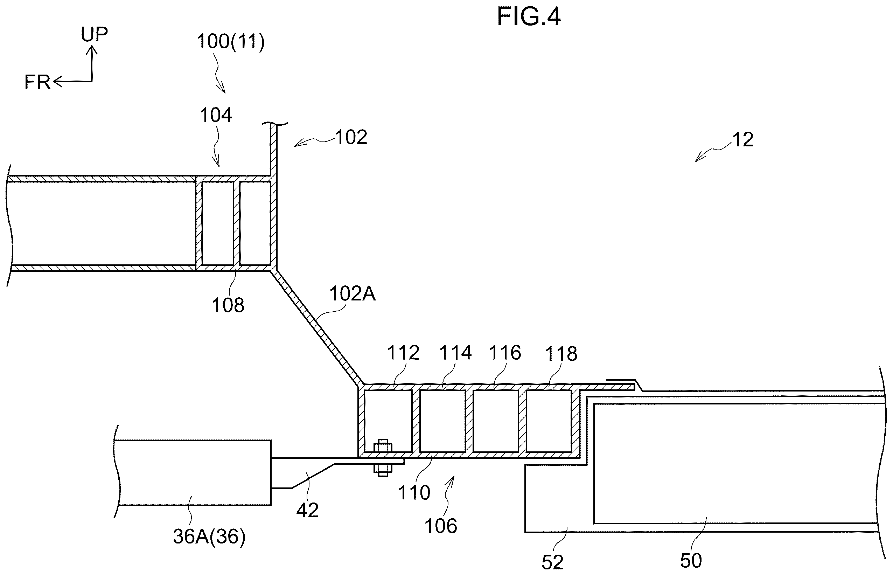

In contrast thereto, as illustrated in Fig. 4, in a vehicle 12 applied with the vehicle frame structure 100 according to the second exemplary embodiment, a dashboard cross member upper 104 provided to a dashboard panel 102, a dashboard cross member lower 106, and connection section 102A, are integrally molded.

Furthermore, in the present exemplary embodiment, the dashboard cross member upper 104 is integrated together with a shock absorption section 108, and the dashboard cross member lower 106 is integrated together with a shock absorption section 110. Namely, in the present exemplary embodiment, the dashboard cross member upper 104 configures the shock absorption section 108, and the dashboard cross member lower 106 configures the shock absorption section 110. The present exemplary embodiment thereby enables the number of components of configuration members configuring the vehicle 12 to be reduced while raising the rigidity of the vehicle 12.

Moreover, in the present exemplary embodiment, the shock absorption section 108 is integrally molded together with the dashboard cross member upper 104, and so ribs or the like are not needed to ensure that the position of the shock absorption section 108 is not displaced when collision load is input. This means that residual non-collapsed portions due to ribs or the like do not arise. This means that crash energy can be absorbed even more effectively due to suppressing residual non-collapsed portions in the shock absorption section 108.

Furthermore, in the present exemplary embodiment, the shock absorption section 110 is integrally molded to the dashboard cross member lower 106, and so ribs or the like are not needed to ensure that the position of the shock absorption section 110 is not displaced when input with collision load. This means that residual non-collapsed portions do not arise due to ribs or the like. This means that crash energy can be absorbed even more effectively in the shock absorption section 110 due to suppressing residual non-collapsed portions.

The present exemplary embodiment raises the degrees of freedom for design in the dashboard cross member upper 104 and in the dashboard cross member lower 106 due to the dashboard cross member upper 104, the dashboard cross member lower 106, and the connection section 102A being provided integrally molded to the dashboard panel 102.

For example, in the present exemplary embodiment, plural rectangular tubes (first shock absorption sections) 112, 114, 116, 118 extending along the vehicle width direction to configure the shock absorption section 110 may be formed with substantially the same size as each other.

Note that although in the present exemplary embodiment, the dashboard panel 102, the dashboard cross member upper 104 including the shock absorption section 108, the dashboard cross member lower 106 including the shock absorption section 110, and the connection section 102A, are integrally molded, not all of these regions are necessarily integrally molded.

### Modified Example 1

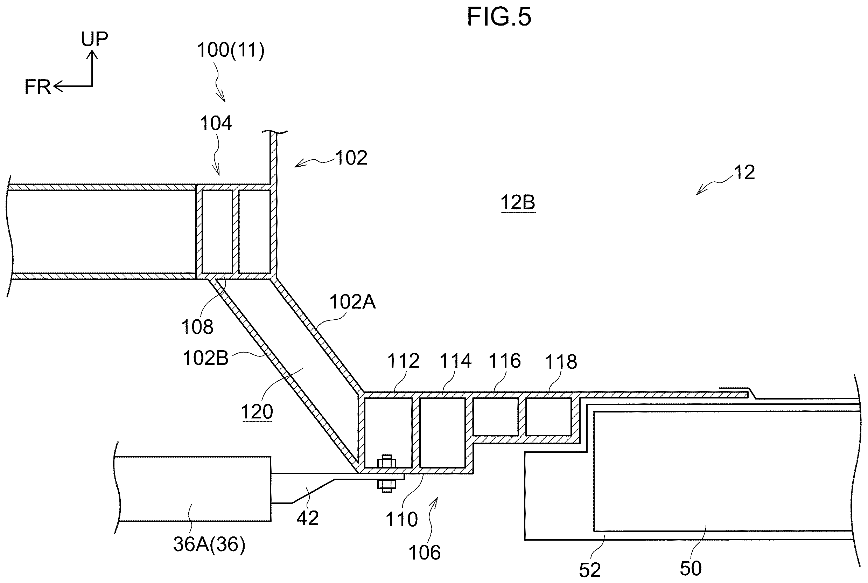

Moreover, in a Modified Example 1, rectangular tubes 112, 114, 116, 118 configuring a shock absorption section 110 are not necessarily always substantially the same size as each other, as illustrated in Fig. 5. For example, the rectangular tube 112 and the rectangular tube 114 may be formed at substantially the same size as each other, the vehicle front section 116 and the rectangular tube 118 may be formed at substantially the same size as each other, and the rectangular tubes 112, 114 may be formed longer along the vehicle height direction than the rectangular tubes 116, 118.

Furthermore, although the dashboard panel connection section 102A connecting the dashboard cross member upper 104 and the dashboard cross member lower 106 together is provided to the dashboard panel 102, a separate connection section 102B may be provided at the front side of the connection section 102A.

The connection section 102A connects the rear end portion of the dashboard cross member upper 104 to the upper end portion of the dashboard cross member lower 106, the connection section 102B connects the front end portion of the dashboard cross member upper 104 to the lower end portion of the dashboard cross member lower 106, with the connection section 102B configuring a closed-cross-section section 120 between itself and the connection section 102A. This thereby enables the rigidity of the dashboard panel 102 to be raised in the present exemplary embodiment, enabling deformation of the dashboard panel 102 to be suppressed when collision load is input from the vehicle front.

### Modified Example 2

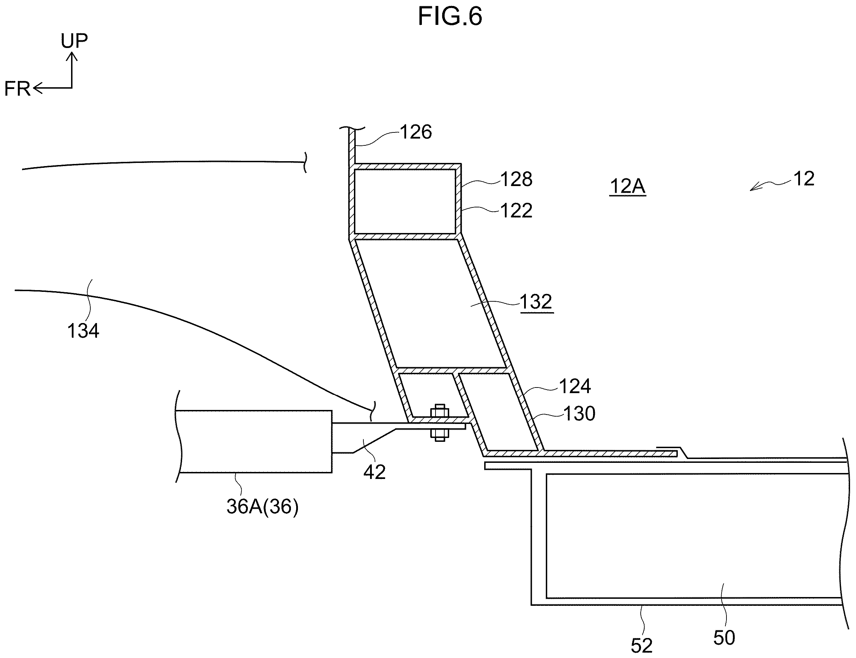

Furthermore, in a Modified Example 2, a dashboard cross member upper 122 and a dashboard cross member lower 124 may be provided on the vehicle cabin 12B side, as illustrated in Fig. 6. For example, in the present exemplary embodiment, the dashboard cross member upper 122 and the dashboard cross member lower 124 are formed to a dashboard panel 126. The dashboard cross member upper 122 and the dashboard cross member lower 124 may also form a shock absorption section 128 and a shock absorption section 130 to the dashboard panel 126 in order to configure the shock absorption sections 128, 130.

Moreover, a closed-cross-section section 132 is formed between the dashboard cross member upper 122 and the dashboard cross member lower 124, and the rigidity can be raised in the dashboard panel 126 across from the dashboard cross member upper 122 to the dashboard cross member lower 124. A front side member 134 may accordingly be connected across from the dashboard cross member upper 122 to the dashboard cross member lower 124.

### Supplements

The following configuration may be appropriately combined as the vehicle frame structure according to the present disclosure.

### Configuration 1

A lower vehicle frame member that is either arranged extending along a vehicle width direction at a vehicle front-rear direction front section of a vehicle cabin and at a lower side of the vehicle cabin, or arranged extending along the vehicle width direction at the vehicle front-rear direction front section of the vehicle cabin and at a lower section of the vehicle cabin, and a first shock absorption section that is provided to the lower vehicle frame member.

### Configuration 2

The first shock absorption section is provided as plural individual first shock absorption sections along the vehicle front-rear direction.

### Configuration 3

At least part of the plural first shock absorption sections is formed as a single body with the lower vehicle frame member.

### Configuration 4

The lower vehicle frame member is arranged at the vehicle front-rear direction front section and lower side of the vehicle cabin and a battery arranged at a vehicle lower side of the vehicle cabin is also included, and at least part of the first shock absorption section is provided so as to overlap with the battery in at least one direction from out of a vehicle height direction and the vehicle front-rear direction.

### Configuration 5

A suspension member is further provided at a vehicle front side of the battery, wherein the suspension member is directly or indirectly connected to the lower vehicle frame member.

### Configuration 6

The lower vehicle frame member includes a first lower wall that configures a bottom section of the lower vehicle frame member and extends along the vehicle front-rear direction when viewed in vehicle longitudinal cross-section, a second lower wall that configures the lower vehicle frame member bottom section, that is formed at a vehicle rear side of the first lower wall and further to the vehicle lower side than the first lower wall, and that extends along the vehicle front-rear direction when viewed in vehicle longitudinal cross-section, and a vertical wall that connects the first lower wall and the second lower wall together in the vehicle height direction. A vehicle front-rear direction rear side of the suspension member is connected to the first lower wall, and a vehicle front-rear direction front side of the battery is connected to the second lower wall.

### Configuration 7

A rear end portion of the suspension member is arranged so as to be separated from the vertical wall in the vehicle front-rear direction and so as to overlap with the first lower wall in the vehicle height direction when viewed in vehicle longitudinal cross-section.

### Configuration 8

An upper vehicle frame member extending along the vehicle width direction at a vehicle upper side of the lower vehicle frame member is further provided, wherein a second shock absorption section is provided to the upper vehicle frame member.

### Configuration 9

Plural of the second shock absorption sections are provided along the vehicle front-rear direction.

### Configuration 10

A front side member extending along the vehicle front-rear direction at a vehicle width direction outside is further provided, wherein the front side member is connected to the upper vehicle frame member, and at least part of the second shock absorption sections is arranged so as to overlap with the front side member in a vehicle height direction.

### Configuration 11

At least part of the second shock absorption sections is integrally molded to the upper vehicle frame member.

### Configuration 12

A connection member to connect the lower vehicle frame member and the upper vehicle frame member together is further provided, wherein the lower vehicle frame member, the upper vehicle frame member, and the connection member, are formed as a single body.

Although examples of exemplary embodiments of the present invention have been described above, the exemplary embodiments of the present invention are not limited thereto, appropriate combinations may be employed of the various modified examples with one of the exemplary embodiments, and obviously various other embodiments may be implemented within a scope not departing from the spirit of the present invention.

## Claims

1. A vehicle frame structure comprising:
a lower vehicle frame member (30) that is either arranged extending along a vehicle width direction at a vehicle front-rear direction front section of a vehicle cabin (12B) and at a lower side of the vehicle cabin, or arranged extending along the vehicle width direction at the vehicle front-rear direction front section of the vehicle cabin and at a lower section of the vehicle cabin; and
a first shock absorption section (54) that is provided to the lower vehicle frame member.

2. The vehicle frame structure of claim 1, wherein the first shock absorption section (54) is provided as a plurality of individual first shock absorption sections (56,58,60,62) along the vehicle front-rear direction.

3. The vehicle frame structure of claim 2, wherein at least part of the plurality of first shock absorption sections (56,58,60,62) is formed as a single body with the lower vehicle frame member.

4. The vehicle frame structure of any one of claims 1 to 3, wherein:
the lower vehicle frame member (30) is arranged at the vehicle front-rear direction front section and lower side of the vehicle cabin (12B) and a battery (50) arranged at a vehicle lower side of the vehicle cabin is also included; and
at least part of the first shock absorption section (54) is provided so as to overlap with the battery (50) in at least one direction from out of a vehicle height direction and the vehicle front-rear direction.

5. The vehicle frame structure of claim 4, further comprising a suspension member (36) provided at a vehicle front side of the battery (50), wherein:
the suspension member is directly or indirectly connected to the lower vehicle frame member.

6. The vehicle frame structure of claim 5, wherein:
the lower vehicle frame member (30) includes
a first lower wall (30A) that configures a bottom section of the lower vehicle frame member and extends along the vehicle front-rear direction when viewed in vehicle longitudinal cross-section,
a second lower wall (30B) that configures the lower vehicle frame member bottom section, that is formed at a vehicle rear side of the first lower wall and further to the vehicle lower side than the first lower wall, and that extends along the vehicle front-rear direction when viewed in vehicle longitudinal cross-section, and
a vertical wall (30C) that connects the first lower wall and the second lower wall together in the vehicle height direction; and
a vehicle front-rear direction rear side of the suspension member is connected to the first lower wall; and
a vehicle front-rear direction front side of the battery is connected to the second lower wall.

7. The vehicle frame structure of claim 6, wherein a rear end portion of the suspension member (36) is arranged so as to be separated from the vertical wall (30C) in the vehicle front-rear direction and so as to overlap with the first lower wall (30A) in the vehicle height direction when viewed in vehicle longitudinal cross-section.

8. The vehicle frame structure of any one of claim 1 to claim 7, further comprising:
an upper vehicle frame member (22) extending along the vehicle width direction at a vehicle upper side of the lower vehicle frame member (30), wherein
a second shock absorption section (66) is provided to the upper vehicle frame member.

9. The vehicle frame structure of claim 8, wherein a plurality of the second shock absorption sections (66, 68, 70) are provided along the vehicle front-rear direction.

10. The vehicle frame structure of claim 9, further comprising a front side member (16) extending along the vehicle front-rear direction at a vehicle width direction outside, wherein:
the front side member is connected to the upper vehicle frame member (22); and
at least part of the second shock absorption sections (66,68,70) is arranged so as to overlap with the front side member (16) in a vehicle height direction.

11. The vehicle frame structure of claim 10, wherein at least part of the second shock absorption sections (66,68,70) is integrally molded to the upper vehicle frame member (22).

12. The vehicle frame structure of any one of claim 8 to claim 11, further comprising a connection member (14A) to connect the lower vehicle frame member (30) and the upper vehicle frame member (22) together, wherein:
the lower vehicle frame member, the upper vehicle frame member, and the connection member, are formed as a single body.
